# EUROPEAN PATENT APPLICATION

(11) **EP 4 074 605 A1**
(43) Date of publication of application: **19.10.2022**
(21) Application number: 22162011.5
(22) Date of filing: 15.03.2022
(51) Int. Cl.: B64D 27/24, H02J 4/00

(54) **AIRCRAFT ELECTRICAL POWER DISTRIBUTION**

(30) Priority: 15.04.2021 GB 202105361
(71) Applicant: Rolls-Royce plc, London N1 9FX (GB)
(72) Inventor: Calder, Matthew, Derby, DE24 8BJ (GB)
(74) Representative: Rolls-Royce plc

(57) **Abstract**

Aircraft electric power distribution systems and methods 80 of operating aircraft electrical power distribution systems are provided. One such method 80 comprises determining a measure of an electrical power demand of a power and propulsion system 300 of the aircraft; setting a target operating voltage of the aircraft electrical power distribution system based at least in part on the measure of the electrical power demand; and controlling the operating voltage in accordance with the set target operating voltage. In some embodiments the measure of the electrical power is a measure of an operating parameter of a gas turbine engine 101, 201 or propulsor 204 of the aircraft. The operating parameter may include one or more of: a speed of an airflow through the gas turbine engine 101, 201 or propulsor 204; a rotational speed of a spool of the gas turbine engine 101, 201 or propulsor 204; a rate of fuel flow into a combustor of the gas turbine engine 101, 201; a pressure in the gas turbine engine 101, 201 or propulsor 204; and a temperature in the gas turbine engine 101, 201 or propulsor 204.

## Description

### TECHNICAL FIELD

This disclosure concerns electrical power distribution systems, particularly but not exclusively for use in aircraft, and to methods of controlling operating voltages of such electrical power distribution systems.

### BACKGROUND

In aerospace, aircraft have electrical power distribution systems for delivering electrical power to various electrical loads. In aircraft powered by gas turbine engines, electrical machines coupled to the spools of the engines, often via accessory gearboxes, generate electrical power which is distributed to electrical loads located around the airframe. Propulsive thrust is also provided exclusively or almost exclusively by gas turbine engines in so-called 'more electric' aircraft, but these aircraft make greater use of electrical power, for example to power accessories such as cabin blowers and fuel pumps and to use spool-coupled electrical machines to transfer mechanical power to, from and in some cases between engine spools to start the engine and improve engine operability. Hybrid electric aircraft make even greater use of electrical power, with high power generation capability and propulsors that are partially or exclusively driven by electrical machines. Purely electric aircraft completely dispense with internal combustion engines, with all aircraft systems being exclusively electrically powered using energy stored in batteries, fuel cells or the like.

Conventionally, an aircraft's electrical power distribution system utilizes fixed voltage settings, for example power generation at 115 or 230 Volts at 400 Hz ac, interfacing with a 28 Volt dc distribution bus via power electronics. In such a system, an increase in the total electrical power demand of the served loads is accommodated by increasing the current on the distribution bus. A problem with this approach is that increasing the current increases the resistive (I²R) losses associated with the distribution system. This problem may become more significant as aircraft become more electric in their design because the electrical power demand may become higher.

United States Patent Publication US 10,968,765 B2 relates to methods of operating a power system comprising a gas turbine engine, an electric machine rotatable with the gas turbine engine and an electrical power load driven at least in part by electrical power generated by the electric machine. The gas turbine engine is operated in a maximum regulator mode in response to receiving a command to operate at a power level greater than a reference level at which the gas turbine engine is initially operating.

### SUMMARY

According to a first aspect, there is provided a method of operating an aircraft electrical power distribution system having an operating voltage. The method comprises: determining a measure of an electrical power demand of a power and propulsion system of the aircraft; setting a target operating voltage of the aircraft electrical power distribution system based at least in part on the measure of the electrical power demand; and controlling the operating voltage in accordance with the set target operating voltage. The method may further comprise distributing power to one or more electrical loads on the aircraft, the distributed power being controlled to have a voltage at or near the target operating voltage.

According to a second aspect, there is provided a computer program comprising program code which, when executed by a computer system (for example a controller and/or voltage regulator), causes the computer system to perform the method of the first aspect.

According to a third aspect, there is provided a non-transitory computer readable medium having program code stored thereon. When executed by a computer system (for example a controller and/or voltage regulator), the program code causes the computer system to perform the method of the first aspect. The non-transitory computer readable medium may be any suitable medium known in the art. Examples include but are not limited to ROM, RAM, a hard disk, a solid-state drive, flash memory and an optical storage device.

According a fourth aspect, there is provided an aircraft electrical power distribution system comprising: one or more sensors arranged to determine a measure of an electrical power demand of a power and propulsion system of the aircraft; a controller arranged to set a target operating voltage of the aircraft electrical power distribution system based at least in part on the measure of the electrical power demand; and a voltage regulator arranged to regulate the operating voltage of the electrical power distribution system in accordance with the set target operating voltage. The aircraft electrical power distribution system may further comprise an electrical distribution bus. The operating voltage may be an operating voltage of the electrical distribution bus. The aircraft electrical power distribution system may further comprise an electrical power source, and the voltage regulator may be configured to regulate an output voltage of the electrical power source.

According to a fifth aspect, the controller and/or voltage regulator of the fourth aspect are provided separately.

According to a sixth aspect, there is provided a propulsion system for an aircraft comprising the aircraft electrical power distribution system of the fourth aspect. The propulsion system may comprise one or more gas turbine engines. The propulsion system may be a propulsion system of a hybrid electric aircraft. The propulsion system may also be a propulsion system of a purely electric aircraft.

According to seventh aspect, there is provided an aircraft comprising the electrical power distribution system of the fourth aspect or the propulsion system of the sixth aspect.

In each of the above aspects, the measure of the electrical power demand of the power and propulsion system may be a measure of one or more operating parameters of the aircraft, for example a speed of the aircraft; one or more present operating parameters of a gas turbine engine or propulsor (e.g. an electrical machine-driven ducted fan or propeller) of the aircraft; or an operating parameter of a thermal management system of the power and propulsion system of the aircraft. In one group of embodiments, the measure is a measure of a speed of an airflow through a gas turbine engine or propulsor of the aircraft. In another group of embodiments, the measure additionally or alternatively includes a measure of one or more of: a pressure within the gas turbine engine or propulsor; a rotational speed of a shaft or spool of the gas turbine engine or propulsor; a temperature within the gas turbine or propulsor; and a rate of fuel flow into a combustor of the gas turbine engine or propulsor.

Each of the above aspects may further involve determining an operating state of the aircraft, the operating state being one of a plurality of pre-defined operating states of the aircraft. Setting the target operating voltage of the aircraft electrical power distribution system may be further based on the determined operating state of the aircraft.

The plurality of pre-defined operating states may include one or more of: a propulsion system configuration of a VTOL aircraft having multiple propulsion system configurations (for example a vertical flight configuration and a horizontal flight configuration); a ground idle condition of a gas turbine engine; a take-off condition of a gas turbine engine; a cruise condition of a gas turbine engine; and a reheat condition of a gas turbine engine.

Each one of the plurality of pre-defined operating states may correspond to a range of operating voltages. Setting the target operating voltage of the aircraft electrical power distribution system may comprise setting a target operating voltage that is within the range of operating voltages corresponding to the determined operating state.

Each of the above aspects may further involve determining a measure of an electrical power demand associated with one or more non-continuous electrical loads of the aircraft power and propulsion system. Setting the target operating voltage of the aircraft electrical power distribution system may be further based on the measure of the electrical power demand associated with the one or more non-continuous electrical loads.

Setting the target operating voltage may comprise: (i) continuously increasing the target operating voltage when the electrical power demand, as indicated by the determined measure of the electrical power demand, is increasing; (ii) continuously decreasing the target operating voltage when the electrical power, as indicated by the determined measure of the electrical power demand, demand is decreasing; and (iii) maintaining the target operating voltage at a constant level when the electrical power demand, as indicated by the determined measure of the electrical power demand, is constant. The measure of the electrical power demand may be any of the above mentioned measures such as an operating parameter of a gas turbine engine or propulsor.

Setting the target operating voltage may comprise: (i) pre-defining a plurality of set power demand levels; (ii) stepping up the voltage to a pre-set level of a plurality of pre-set voltage levels if the electrical power demand, as indicated by the determined measure of the electrical power demand, of the power and propulsion system increases towards or past a value corresponding to one of the set levels; and (iii) stepping down the voltage to a pre-set level of a plurality of pre-set voltage levels if the electrical power demand, as indicated by the determined measure of the electrical power demand, of the power and propulsion system decreases towards or past a value corresponding to one of the set levels. The set power demand levels may correspond to operating parameter levels (e.g. gas turbine engine or propulsor operating parameter levels, or thermal management system operating parameter levels).

Hysteresis bands may be defined around the set levels. The stepping down of voltage may be performed when the electrical power demand, as indicated by the determined measure of the electrical power demand, reaches the hysteresis band below the set level. The stepping up of the voltage may be performed when the electrical power demand, as indicated by the determined measure of the electrical power demand, reaches the hysteresis band above the set level.

Each of the above aspects may further involve determining a measure of ambient pressure or a measure of an altitude of the aircraft. Setting the target operating voltage of the aircraft electrical power distribution system may be further based on the measure of ambient pressure or a measure of an altitude of the aircraft.

Setting the target operating voltage of the aircraft electrical power distribution system may comprise: determining, based at least in part on the measure of the electrical power demand of the power and propulsion system, a first operating voltage for the aircraft electrical power distribution system; determining, based at least in part on the measure of ambient pressure or a measure of an altitude of the aircraft, a second operating voltage for the aircraft electrical power distribution system; and setting the target operating voltage equal to the lower of the first and second operating voltages.

Setting the target operating voltage may comprise: (i) continuously increasing the target operating voltage when ambient pressure in increasing or altitude is decreasing; (ii) continuously decreasing the target operating voltage when ambient pressure is decreasing or altitude is increasing; and (iii) maintaining the target operating voltage at a constant level when ambient pressure or altitude is constant. Setting the target operating voltage may comprise: (i) pre-defining a plurality of set pressure or altitude levels; (ii) stepping up the voltage to a pre-set level of a plurality of pre-set voltage levels if the measure of ambient pressure increases towards or past a value corresponding to one of the set levels or if the measure of altitude decreases towards or past a value corresponding to one of the set levels; and (ii) stepping down the voltage to a pre-set level of a plurality of pre-set voltage levels if the measure of ambient pressure decreases towards or past a value corresponding to one of the set levels or if the measure of altitude increases towards or past a value corresponding to one of the set levels.

Hysteresis bands may be defined around the set levels. The stepping down of the voltage may be performed when the measure of ambient pressure or altitude reaches the hysteresis band below the set level. The stepping up of voltage may be performed when the measure of ambient pressure or altitude reaches the hysteresis band above the set level.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** shows a general arrangement of a turbofan engine for an aircraft;
**Figure 2A** is a schematic illustration of a hybrid electric aircraft propulsion system;
**Figure 2B** illustrates an electrically powered propulsor such as may be used in a hybrid electric propulsion system;
**Figure 3** is a schematic illustration of an aircraft electrical power and propulsion system;
**Figure 4A** is a graph showing how the voltage level of an aircraft electrical power distribution system may be varied continuously as a function of the power demand of the electrical power and propulsion system;
**Figure 4B** is a graph showing how the voltage level of an aircraft electrical power distribution system may be varied in a step-wise manner as a function of the power demand of the electrical power and propulsion system;
**Figure 5** is a Paschen curve illustrating a relationship between electrical breakdown voltage and pressure;
**Figure 6A** is a graph illustrating how a maximum voltage level of an aircraft electrical power distribution system may be selected as a function of altitude or ambient pressure;
**Figure 6B** is another graph illustrating how a maximum voltage level of an aircraft electrical power distribution system may be selected as a function of altitude or ambient pressure;
**Figure 7** is a schematic illustration of a control loop for setting an operating voltage level of an electrical power distribution system; and
**Figure 8** is a flow chart illustrating a method of operating an aircraft electrical power distribution system.

### DETAILED DESCRIPTION

### Figure 1

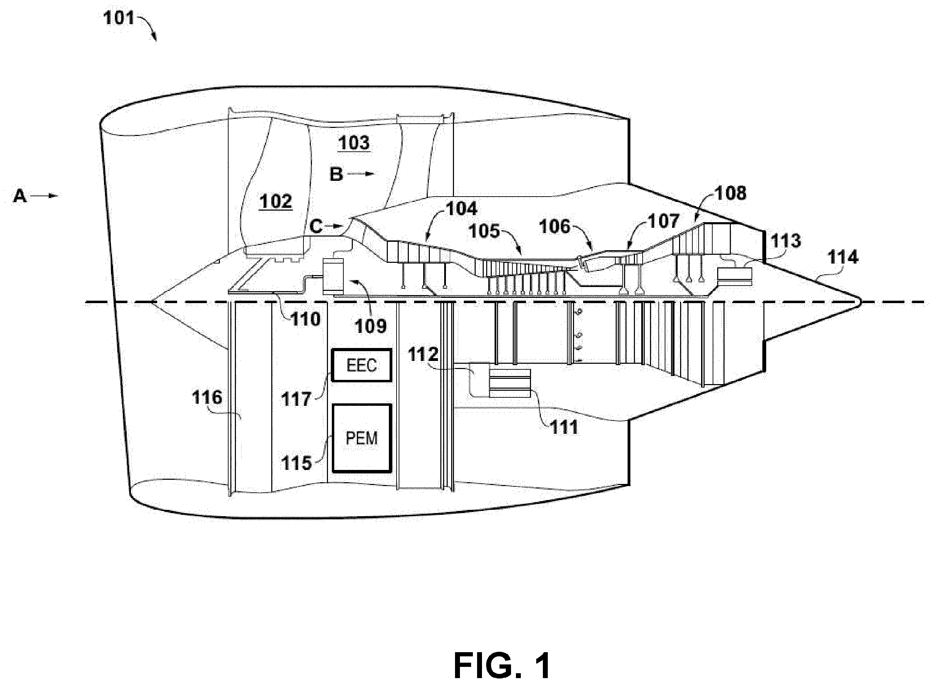

A general arrangement of an engine 101 for an aircraft is shown in Figure 1. The engine 101 is of turbofan configuration, and thus comprises a ducted fan 102 that receives intake air A and generates two pressurised airflows: a bypass flow B which passes axially through a bypass duct 103 and a core flow C which enters a core gas turbine.

The core gas turbine comprises, in axial flow series, a low-pressure compressor 104, a high-pressure compressor 105, a combustor 106, a high-pressure turbine 107, and a low-pressure turbine 108.

In operation, the core flow C is compressed by the low-pressure compressor 104 and is then directed into the high-pressure compressor 105 where further compression takes place. The compressed air exhausted from the high-pressure compressor 105 is directed into the combustor 106 where it is mixed with fuel and the mixture is combusted. The resultant hot combustion products then expand through, and thereby drive, the high-pressure turbine 107 and in turn the low-pressure turbine 108 before being exhausted to provide a small proportion of the overall thrust.

The high-pressure turbine 107 drives the high-pressure compressor 105 via an interconnecting shaft. The low-pressure turbine 108 drives the low-pressure compressor 104 via another interconnecting shaft. Together, the high-pressure compressor 105, high-pressure turbine 107, and associated interconnecting shaft form part of a high-pressure spool of the engine 101. Similarly, the low-pressure compressor 104, low-pressure turbine 108, and associated interconnecting shaft form part of a low-pressure spool of the engine 101. Such nomenclature will be familiar to those skilled in the art. Those skilled in the art will also appreciate that whilst the illustrated engine has two spools, other gas turbine engines have a different number of spools, e.g., three spools.

The fan 102 is driven by the low-pressure turbine 108 via a reduction gearbox in the form of a planetary-configuration epicyclic gearbox 109. Thus in this configuration, the low-pressure turbine 108 is connected with a sun gear of the gearbox 109. The sun gear is meshed with a plurality of planet gears located in a rotating carrier, which planet gears are in turn meshed with a static ring gear. The rotating carrier drives the fan 102 via a fan shaft 110. It will be appreciated that in alternative embodiments a star-configuration epicyclic gearbox (in which the planet carrier is static and the ring gear rotates and provides the output) may be used instead, and indeed that the gearbox 109 may be omitted entirely so that the fan 102 is driven directly by the low-pressure turbine 108.

It is increasingly desirable to facilitate a greater degree of electrical functionality on the airframe and on the engine. To this end, the engine 101 of the present embodiment comprises one or more rotary electrical machines, generally capable of operating both as a motor and as a generator. The number and arrangement of the rotary electrical machines will depend to some extent on the desired functionality. Some embodiments of the engine 101 include a single rotary electrical machine 111 driven by the high-pressure spool, for example by a core-mounted accessory drive 112 of conventional configuration. Such a configuration facilitates the generation of electrical power for the engine and the aircraft and the driving of the high-pressure spool to facilitate starting of the engine in place of an air turbine starter. Other embodiments, including the one shown in Figure 1, comprise both a first rotary electrical machine 111 coupled with the high pressure spool and a second rotary electrical machine 113 coupled with the low pressure spool. In addition to generating electrical power and the starting the engine 101, having both first and second rotary machines 111, 113, connected by power electronics, can facilitate the transfer of mechanical power between the high and lower pressure spools to improve operability, fuel consumption etc.

As mentioned above, in Figure 1 the first rotary electrical machine 111 is driven by the high-pressure spool by a core-mounted accessory drive 112 of conventional configuration. In alternative embodiments, the first electrical machine 111 may be mounted coaxially with the turbomachinery in the engine 101. For example, the first electrical machine 111 may be mounted axially in line with the duct between the low- and high-pressure compressors 104 and 105. In Figure 1, the second electrical machine 113 is mounted in the tail cone 114 of the engine 101 coaxially with the turbomachinery and is coupled to the low-pressure turbine 108. In alternative embodiments, the second rotary electrical machine 113 may be located axially in line with low-pressure compressor 104, which may adopt a bladed disc or bladed drum configuration to provide space for the second rotary electrical machine 113. It will of course be appreciated by those skilled in the art that any other suitable location for the first and (if present) second electrical machines may be adopted.

The first and second electrical machines 111, 113 are connected with power electronics. Extraction of power from or application of power to the electrical machines is performed by a power electronics module (PEM) 115. In the present embodiment, the PEM 115 is mounted on the fan case 116 of the engine 101, but it will be appreciated that it may be mounted elsewhere such as on the core of the gas turbine, or in the vehicle to which the engine 101 is attached, for example.

Control of the PEM 115 and of the first and second electrical machines 111 and 113 is in the present example performed by an engine electronic controller (EEC) 117. In the present embodiment the EEC 117 is a full-authority digital engine controller (FADEC), the configuration of which will be known and understood by those skilled in the art. It therefore controls all aspects of the engine 101, i.e. both of the core gas turbine and the first and second electrical machines 111 and 113. In this way, the EEC 117 may holistically respond to both thrust demand and electrical power demand.

The one or more rotary electrical machines 111, 113 and the power electronics 115 may be configured to output to or receive electric power from one, two or more dc busses. The dc busses allow for the distribution of electrical power to other engine electrical loads and to electrical loads on the airframe.

Those skilled in the art will appreciate that the gas turbine engine 101 described above may be regarded as a 'more electric' gas turbine engine because of the increased role of the electrical machines 111, 113 compared with those of conventional gas turbines.

### Figures 2A and 2B

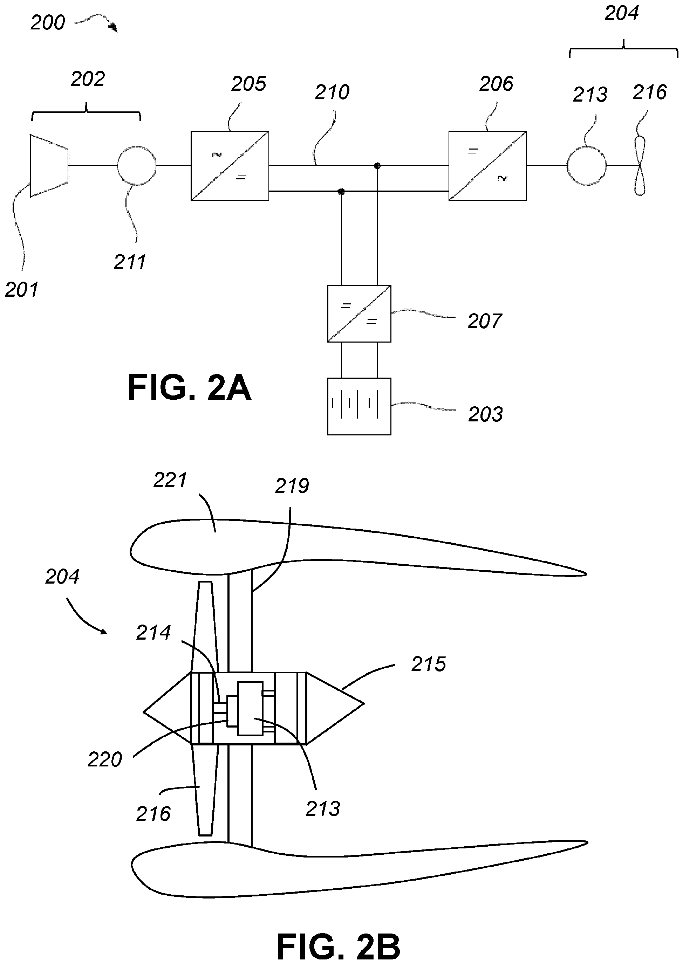

Figure 2A illustrates an exemplary propulsion system 200 of a hybrid electric aircraft. The propulsion system 200 includes a generator set 202 comprising an engine 201 and electrical generator 211, and a battery pack 203. Both the generator set 202 and the battery pack 203 are used as energy sources to power a motor-driven propulsor 204, an example of which is shown in Figure 2B.

The illustrated propulsion system 200 further comprises an AC/DC converter 205, a dc distribution bus 210, a DC/AC converter 206 and a DC/DC converter 207. It will be appreciated that whilst one generator set 202 and one propulsor 204 are illustrated in this example, a propulsion system 200 may include more than one generator set 202 and/or one or more propulsor 204.

A shaft or spool of the engine 201 is coupled to and drives the rotation of a shaft of the generator 211 which thereby produces alternating current. The AC/DC converter 205, which faces the generator 211, converts the alternating current into direct current which is fed to various electrical systems and loads via the dc distribution bus 210. These electrical systems include non-propulsive loads (not shown in Figure 2A) and the motor 213 which drives the propulsor 204 via the DC/AC converter 206.

The battery pack 203, which may be made up of a number of battery modules connected in series and/or parallel, is connected to the dc distribution bus 210 via the DC/DC converter 207. The DC/DC converter 207 converts between a voltage of the battery pack 203 and a voltage of the dc distribution bus 210. In this way, the battery pack 203 can replace or supplement the power provided by the generator set 202 (by discharging and thereby feeding the DC distribution bus 210) or can be charged using the power provided by the generator set 202 (by being fed by the dc distribution bus 210).

Referring to Figure 2B, in this example the propulsor 204 takes the form of a ducted fan. The fan 216 is enclosed within a fan duct 219 defined within a nacelle 221, and is mounted to a core nacelle 215. The fan 216 is driven by the electrical machine 213 via a drive shaft 214, both of which may also be thought of as components of the propulsor 204. In this embodiment a gearbox 220 is provided between the electrical machine 213 and the drive shaft 214.

The electrical machine 213 is supplied with electric power from a power source, for example the generator set 202 and/or the battery 203 via the dc bus 210. The electrical machine 213 of the propulsor, and indeed the electrical machine 211 of the generator set 202, may be of any suitable type, for example of the permanent magnet synchronous type.

Those skilled in the art will recognise the propulsion system 200 of Figures 2A-B to be of the series hybrid type. Other hybrid electric propulsion systems are of the parallel type, while still others are of the turboelectric type or have features of more than one type. The configuration of the more electric engine 101 of Figure 1 may be considered similar to a parallel hybrid system, with the main distinction being the roles of the electrical machines. For example, the electrical machines of a more electric engine are generally only used in motor mode to start the engine and to improve engine operability, whereas the electric machines of a parallel hybrid propulsion system are used to motor the spools to meaningfully add to the amount of propulsive thrust produced by the turbomachinery.

Those skilled in the art will also appreciate that the hybrid architecture illustrated in Figure 2A is only one example, and that other architectures, including architectures with ac distribution busses, are known and will occur to those skilled in the art.

The propulsor 204 of Figure 2B, or another type of propulsor such an open rotor or propeller, may also be used in a purely electric power and propulsion system which includes batteries and/or fuel cells but no gas turbines or generator sets. Embodiments described herein may be used to control operating voltages of more electric, hybrid electric and purely electric power and propulsion systems.

### Figure 3

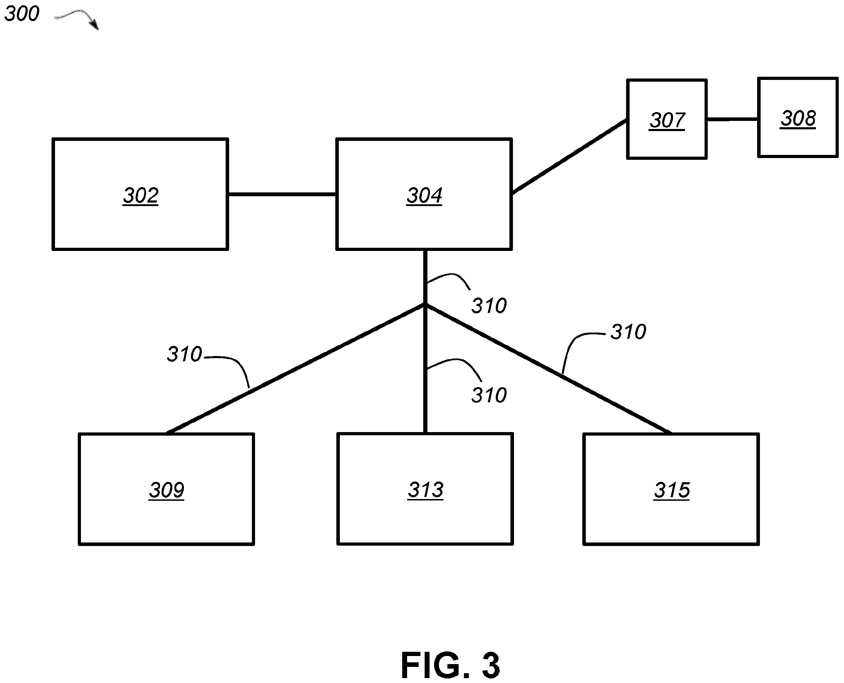

Figure 3 illustrates a general arrangement of an aircraft electrical power and propulsion system 300 in a simplified and purely schematic form. The system 300 includes an electrical power source 302; electrical loads 309, 313, 315 which receive electrical power from the power source 302 via a power distribution bus 310; and a voltage regulator 304 which regulates a voltage level of the electrical distribution system. The voltage regulator 304 is in communication with a controller 307 which receives sensor data from a sensor arrangement 308, which may itself be or feature one or more higher and/or lower level controllers.

The power source 302 will typically include one or more electrical machines operable as electrical generators, each coupled to a rotary shaft or spool of an engine. It may for example include one or more generator sets, each comprising an engine and electrical machine, in a series hybrid electrical system. Alternatively, the power source 302 may be an electrical machine in a 'more electric' or parallel hybrid architecture. The power source 302 may alternatively or additionally include an energy storage device, for example one or more battery modules or hydrogen fuel cells.

The electrical loads 309, 311, 313 of the power and propulsion system 300 may be any electrical loads associated with the aircraft. The loads may include aircraft system loads 309, for example loads associated with electrically-actuated control surfaces; an electrical wing anti-icing system; or an environmental control system (ECS) of the aircraft which provides cabin pressurisation, heating, lighting and the like. The loads may also include propulsive loads 313, for example electrical machines for powering purely electric propulsors (such as the propulsor 204 in Figures 2A-2B) or for motoring one or more spools of an engine, such as a gas turbine in a more electric or parallel hybrid electric arrangement. Other exemplary loads 315 include electrically powered engine (or propulsor) loads, for example an engine fuel pump or oil pump and loads associated with thermal management systems of the power and propulsion system 300.

The electrical distribution bus 310 distributes electrical power from the power source to the loads 309, 313, 315 which may be located at various positions about the aircraft. The distribution bus 310, which may be an alternating current (ac) bus or a direct current (dc) bus and may include one or multiple (e.g. two) power channels, will typically take the form of insulated wires or cables. In accordance with the present invention, the voltage of the power carried by the distribution bus 310 is variable. Where the distribution bus 310 carries ac, it will be understood that the term "variable voltage" refers to e.g. the amplitude or rms voltage, and not merely to the periodic variation inherent in any ac system. Also in accordance with the present invention, the voltage on the distribution bus 310 may be relatively high, for example higher than the 28 Volts used in some known systems. In some embodiments, the voltage may be over 100 V, for example over 200V, over 270 V, over 300 V, over 400V, over 500 V, over 540 V or even higher than 600 V.

The voltage regulator 304 is operable to control the voltage level of the electrical power distribution system, and in particular to control the voltage level on the distribution bus 310. The manner in which the voltage regulator 304 affects control of the voltage can vary depending on the specific application and its implementation details. For example:
- The voltage regulator 304 may include or interface with power electronics which receive power from the power source 302 and output power to the distribution bus 310. In some embodiments, the voltage regulator 304 may control the duty cycles of the switching elements of the power electronics in order to vary the output voltage. This may be particularly useful for varying the operating voltage in a continuous manner and/or over a relatively small range of voltages.
- Additionally or alternatively, the power electronics may be reconfigurable so as to control whether and by how much a voltage is stepped up or down. For example, an AC/DC power electronics converter may include, in series, an AC/DC converter and a DC/DC converter. The DC/DC converter may step the output voltage up or down, and be selectively connectable to the output of the AC/DC converter under the control of the voltage regulator 304.
- One or more transformers may be used to step up or step down the voltage. The ratio by which the voltage is stepped up or stepped down may be variable or reconfigurable, under the control of the voltage regulator.
- A power source 302 capable of variable voltage generation/output may be used and controlled by the voltage regulator 304. For example, the voltage regulator 304 may control the excitation of a generator to vary the generator back EMF and thus the output voltage. As another example, a generator set of the power source 302 may be a shifting generator set with a reconfigurable gear ratio operable to adjust the speed of the rotor of the electrical machine. An electrical machine with a variable magnetic gear ratio may also be used.

The voltage regulator 304, which may be or comprise one or more power electronics converters, operates under the control of a controller 307. The controller 307 receives sensor data, in a raw or processed form, from the sensor arrangement 308 and determines a suitable operating voltage for the electrical power distribution system 300. The controller 307 then provides control signals to the voltage regulator 304 to affect the chosen voltage setting.

It should be appreciated that the functionality of the controller 307 and the voltage regulator 304 may be separate or combined, and that each may be implemented in software, hardware of a combination of the two. In some embodiments, the controller 307 and/or the voltage regulator 304 may be functional modules of another controller, for example a Power Electronics Module (PEM), an Engine Electronic Controller (EEC) or a FADEC.

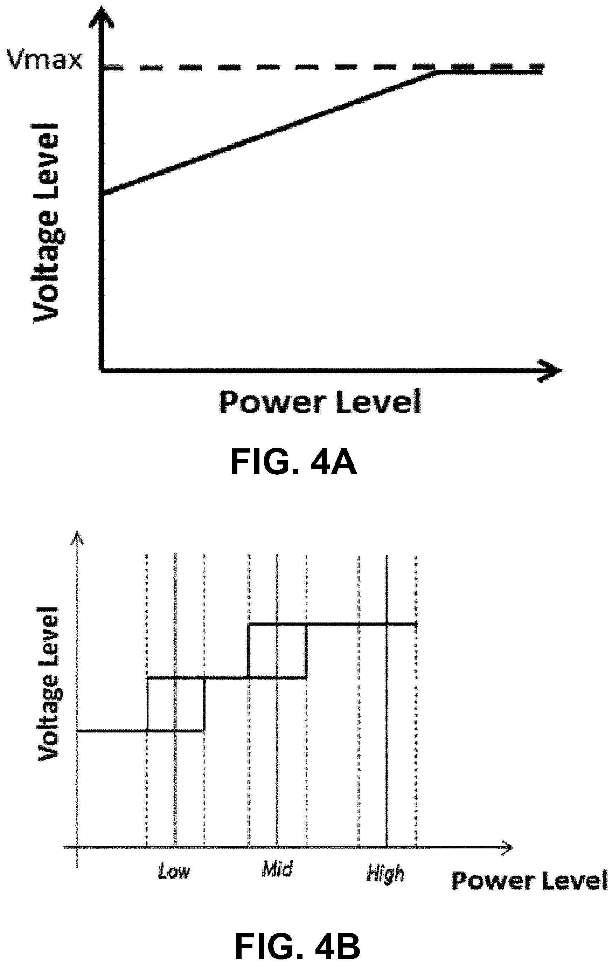

The sensor arrangement 308 includes one or more sensors arranged to collect data and provide it to the controller 307. The data and its use will be discussed in more detail below with reference to Figures 4-8, but exemplary sensors include:
- Sensors to measure the electrical power demands of the electrical loads, for example current and voltage sensors of a conventional type.
- Pressure sensors, for example differential pressure sensors or pitot tubes, which may be used to measure the static and/or total pressure inside and/or outside of the aircraft.
- Airspeed sensors to measure the airspeed of the aircraft. The airspeed may be determined using pressure sensors, for example based on the difference between the measured total and static pressures. Alternatively, a satellite navigation system (e.g. GPS) or an inertial navigation system may be used to derive the airspeed.
- Altitude sensors to measure the altitude of the aircraft. Ambient pressure may be used as a measure of altitude. A satellite navigation system or inertial navigation system may also be used for this purpose.
- Sensors to measure the speed of the airflow through a gas turbine engine or propulsor of the aircraft, at one or more locations in the engine/propulsor. The speed of the airflow may be measured using pressure sensors, or sensors of other kinds, located within the engine/propulsor at appropriate locations. For example, in a gas turbine engine, the speed of the airflow exiting the highest pressure stage of the HP compressor, or the speed of the airflow exiting the lowest pressure stage of the HP turbine, may be measured.
- Sensors to measure the pressure at one or more locations in the gas turbine engine or propulsor. For example, in a gas turbine engine, the pressure at the inlet to the LP compressor (P20) and/or the pressure at the outlet of the HP compressor (P30) may be measured. A derived ratio of the two (P30/P20) may also be determined.
- Sensors to measure the rotational speed of one or more spools of the gas turbine engine or propulsor. For example, the speed of the fan, or the LP spool or HP spool of a gas turbine engine, may be measured. In some embodiments, a measure of the rotational speed may be derived from a suitably located stress sensor, for example on a shaft, with a higher stress indicating a higher rotational speed.
- Sensors to measure or derive a speed or torque of an electrical machine coupled to a gas turbine engine or propulsor.
- Temperature sensors to measure the temperature at one or more locations within the engine or propulsor. For example, in a gas turbine, a temperature within the combustor or a turbine exit temperature may be measured.
- Sensors to measure a rate of fuel flow into the combustor. This may be measured by a fuel metering and pumping system of the engine or derived based on e.g. the throttle lever position.
- Sensors to measure operating parameters of a thermal management system associated with the power and propulsion system 300. For example, operating parameters of a thermal management system (e.g. cooling system) for cooling electrical components such as electrical machines, or cooling systems for cooling turbine stages in a gas turbine engine, may be measured. Suitable parameters will depend on the type of thermal management system, but may include electrical power demand; a temperature of a coolant or heat sink of the thermal management system; a pressure or flow rate of a coolant; or operating parameters of components such as pumps of the thermal management system.

Those skilled in the art will appreciate that aircraft conventionally have some or all of the above sensors, and so the present invention may be implemented without the addition of new sensor hardware.

### Figures 4A and 4B

As discussed previously, some known aircraft electrical distribution systems use fixed operating voltages (e.g. 28 Vdc) and changes to power demand are accommodated by varying the current drawn by the loads. A problem with this approach is that increasing the current increases the I²R losses associated with the distribution system. Furthermore, 12R losses are associated with the generation of heat, which creates a thermal burden and must be managed by thermal management systems which have their own power demands.

This problem may be mitigated by using a higher voltage, for example a distribution bus voltage in excess of 100 Vdc instead of the conventional 28 Vdc. However, using a higher voltage brings its own problems, including an increased risk of electrical breakdown and arcing. The additional insulation required to manage this risk may be bulky and heavy, which can create installation challenges and/or increase fuel consumption. Furthermore, a consequence of the use of a fixed high voltage is that the voltage remains high even when the power demand is low and the achievable reduction in 12R losses is small. This is undesirable because a high voltage can accelerate the deterioration of the insulation and increase converter switching losses.

Thus, in accordance with the present invention, the operating voltage of the electrical power distribution system is variable and controlled based on the total electrical power demand of the power and propulsion system 300 (i.e. the total electrical power demand of the system's electrical loads, including propulsive and non-propulsive loads). In this way, when the electrical power demand is low, a low system voltage can be used so as to keep switching losses and wear to the insulation low, and when the power demand is high a high system voltage can be used to keep the 12R losses and associated thermal burden low.

Figure 4A illustrates a first embodiment in which the operating voltage level (y-axis) is varied as a continuous function of electrical power demand (x-axis). In this example, the voltage increases linearly with power demand from a zero-load voltage until it reaches a maximum, saturation voltage (Vₘₐₓ). Once the maximum voltage has been reached, increasing the power demand further does not result in an increase in the operating voltage level of power distribution system. It will be appreciated that although a linear relationship between voltage level and power level is illustrated, this need not always be the case.

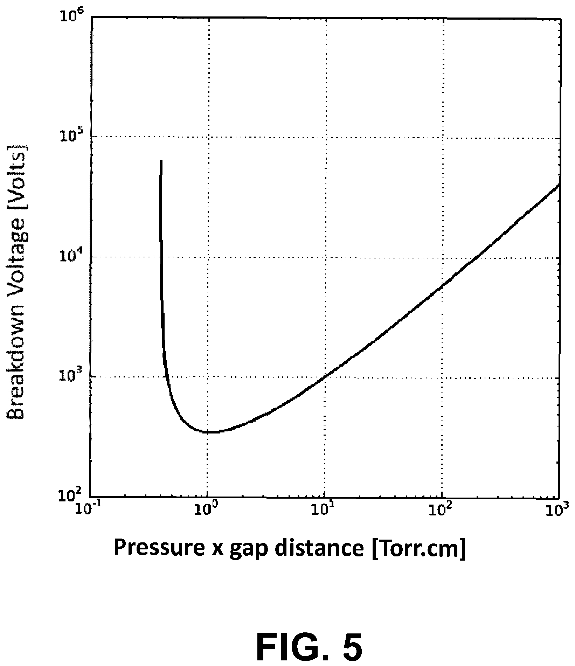

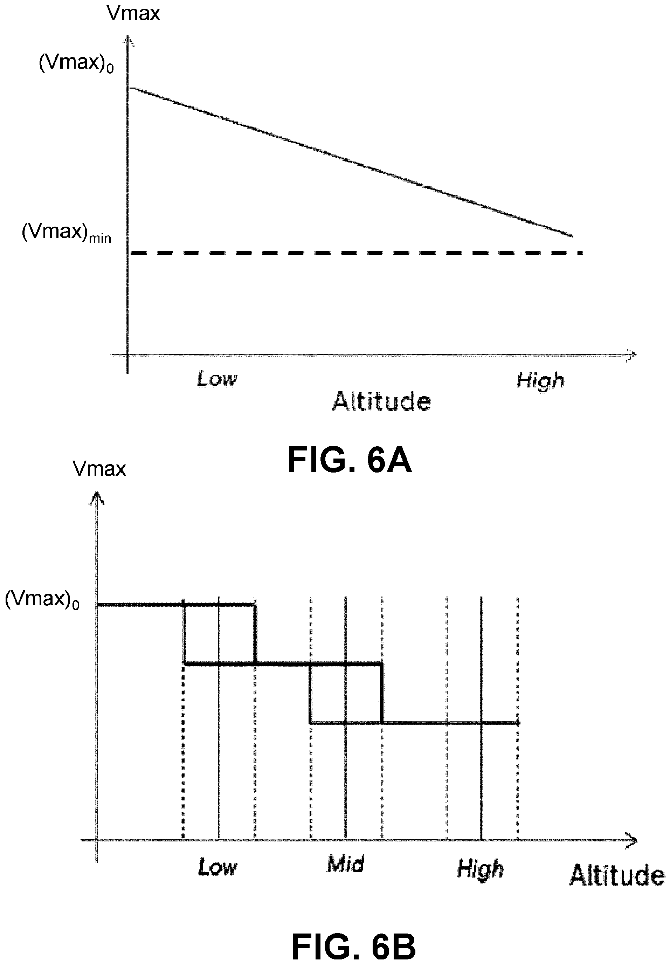

Implementing a maximum voltage, Vₘₐₓ, may be desirable for a number of reasons. For example, a maximum voltage may be set to ensure that, regardless of the power demand, the operating voltage does not exceed a rating of the insulation of cables of the electrical distribution bus 310. As another example, the maximum voltage may be implemented through the voltage regulator 304 so that a fault or failure in the controller 307 cannot result in the operating voltage reaching an unsafe level. In some embodiments the maximum voltage is itself variable and set based on altitude of the aircraft or, equivalently, the ambient pressure outside of the aircraft. This is described in more detail below with reference to Figures 5 and 6A-6B.

Another embodiment is illustrated in Figure 4B. In this embodiment, the operating voltage level (y-axis) is increased or decreased in a step-wise manner as a function of power demand (x-axis). In particular, a number (in this example three) of nominal power demand levels/thresholds are defined, illustrated in Figure 4B by solid vertical lines labelled "Low", "Mid" and "High". A corresponding voltage level is defined for each of the power demand thresholds, illustrated by the horizontal lines. If the power demand increases and crosses a power demand threshold, the operating voltage is increased to the corresponding voltage level. Likewise, if the power demand decreases and crosses a power demand threshold, the operating voltage is decreased to the corresponding voltage level. Vₘₐₓ is not labelled in Figure 4B, but it will be understood that a maximum voltage level could be implemented in this embodiment in the manner described above.

As shown in Figure 4B, hysteresis bands may be utilized to prevent oscillation of the operating voltage in case of fluctuation in the power demand about one of the power demand thresholds. Specifically, upper and lower hysteresis thresholds, illustrated by the dashed vertical lines, are defined either side of the main threshold. The power demand must increase beyond the upper hysteresis threshold for the operating voltage to increase. Conversely, the power demand must decrease beyond the lower hysteresis threshold for the operating voltage to decrease. No voltage change occurs for power demand variation within the hysteresis band.

In principle, the voltage level may be set based on the instantaneous power demand of the electrical loads 309, 313, 315 as determined by the sensor arrangement 308. For example, current sensors located on the bus 310, or sensors/controllers associated with the loads 309, 313, 315 may provide an indication of the instantaneous power demand. However, as aircraft and their power and propulsion systems become more electric in their design, the number of electrical loads is expected to increase. This may include non-continuous electrical loads which do not operate during 'normal' flight, and which thus do not continuously contribute to the system power demand. Taking into the account the power demands of these additional and non-continuous loads may undesirably increase the complexity of the associated control system and require the addition of further power sensing equipment.

Furthermore, a potential drawback of this approach is that it reactive rather than proactive. In other words, the power demand will increase ahead of the voltage level, potentially leading to transient current spikes and thus increased 12R losses/heating in the power distribution system. Potentially more significantly, a situation could arise in which the operating voltage is briefly too low for the loads to draw the required power. This can be avoided in fixed voltage systems by selecting the fixed operating voltage based on the highest expected power demand. In a variable voltage system, however, it may be a problem unless a relatively high zero-load voltage is selected. Selecting a high zero-load voltage limits the appeal of using a variable voltage because it e.g. increases switching losses at low power.

Thus, in preferred embodiments of the invention, the operating voltage level is instead varied in accordance with a measure of the speed of the airflow through a gas turbine engine 101, 201 or propulsor 204 of the aircraft. It has been determined that, particularly in more electric and hybrid electric aircraft, there is strong correlation between the speed of the airflow through an engine or propulsor and an upcoming total system electrical power demand. Therefore, controlling the operating voltage based on airflow speed may be considered a more proactive control approach, potentially reducing I²R losses/heating whilst also allowing for the selection of a relatively low zero-load voltage. It will be understood that in view of the correlation between the two quantities, in Figures 4A-4B the operating voltage level (y-axis) can equally be plotted against airflow speed (x-axis).

It will be appreciated that the speed of the airflow will depend on where in the gas path the speed is measured. For the purposes of the present invention it does not matter where the speed is measured, provided the same location is used consistently. However, in a gas turbine, the exit speed of the low or high pressure compressor may be convenient locations to measure the speed. Any suitable sensors for measuring or deriving the airflow speed may be used, for example pressure sensors.

Whilst preferred embodiments base the operating voltage level on a measure of the speed of the airflow through an engine or propulsor, other parameters can be used due to sufficient correlation with the electrical power demand. Other examples of engine/propulsor operating parameters include a measure of a pressure within the engine or propulsor (which itself may be considered a measure of airflow speed); a measure of the rotational speed of one or more spools/shafts of the engine or propulsor; a measure of the fuel flow rate into the combustion equipment of the engine; and a temperature within the engine or propulsor. Operating parameters of thermal management systems of the aircraft, particularly those associated with the propulsion system (i.e. a gas turbine engine, a propulsor, or energy storage, for example) may also be used as measures of overall system power demand. Thus, in Figures 4A-4B the operating voltage level (y-axis) can equally be plotted against one of the aforementioned parameters (x-axis).

In some instances these alternative operating parameters may be a better indication of the electrical power demand than the speed of the aircraft or the speed of the air through the gas turbine engine (or propulsor). This may be particularly true during transients, for example acceleration/deceleration events, where it will take time for the air speed to settle to a steady speed. In some embodiments, multiple different operating parameters are used to control the operating voltage, for example a first parameter may be used during steady state conditions (e.g. cruise) and a second, different, parameter may be used during a non-steady state condition (e.g. during an acceleration event).

### Figure 5

The voltage at which electrical breakdown occurs generally decreases as pressure decreases, before increasing again at very low pressures. Figure 5 illustrates the Paschen curve for air, with breakdown voltage (Volts) plotted on the y-axis and pressure multiplied by gap distance (Torr.cm, equivalent to Pascal.metres up to a scale factor) plotted on the x-axis. As can be seen, there is a minima (Paschen's minima) at approximately 1 Torr.cm, corresponding to a breakdown voltage of about 327 V at 1 atmosphere of pressure with a conductor spacing of about 7.5 µm.

Ambient pressure is closely correlated with altitude, so the breakdown voltage of an aircraft's electrical power distribution system generally decreases as the aircraft ascends, at least up until an altitude corresponding to Paschen's minima. It is therefore desirable to take into account the effect of altitude/pressure on the operation of the system 300.

In a conventional aircraft electrical power system in which the operating voltages are fixed, the operating voltages may be selected and/or the insulation ratings selected based on the lowest expected operating pressure. Consequently, for a significant portion of the operational envelope, the insulation is significantly over-rated and/or the operating voltage is much lower than it needs to be. The former leads to additional weight and installation challenges, whilst the latter leads to additional I²R losses and heating.

Since the present invention utilizes a variable voltage, due account may be taken of the effect of pressure/altitude on the breakdown voltage without significantly departing from the ideal operating voltage. Thus, safe operation can be achieved without unnecessary I²R losses and heating, or the unnecessary additional weight and installation challenges. Specifically, while the operating voltage is primarily set in accordance with the electrical power demand (e.g. based on the sensed airflow speed through a gas turbine engine), the voltage may be kept at or below a maximum voltage dictated by the present aircraft altitude/pressure. This is indicated in Figure 4A by the horizontal line Vₘₐₓ and could equally be implemented in the alternative embodiment of Figure 4B.

### Figure 6A and 6B

Figure 6A illustrates a first embodiment according to which a maximum allowed operating voltage of the electrical power distribution system 300 is varied in a continuous manner according to the altitude of the aircraft. Maximum system operating voltage (Vₘₐₓ) is plotted on the y-axis and aircraft altitude is plotted on the x-axis. It will be appreciated that ambient pressure could equally be plotted on the x-axis, since these two parameters are related.

In this embodiment, Vₘₐₓ decreases from a zero-altitude voltage, (Vmax)₀, in a continuous manner as the aircraft altitude increases (or the pressure decreases), in this specific example according to a linear relationship. In selecting an operating voltage for the electrical power distribution system 300, the lower voltage level out of Vₘₐₓ and the voltage determined by the controller 307 according to the power demand (e.g. based on the sensed airflow speed through a gas turbine engine) is selected as the operating voltage of the system 300.

The dashed horizontal line, labelled (Vmax)min, represents an operating voltage that would be safe to use at all altitudes. (Vmax)min may be selected according to the rating of the electrical insulation and may, for example, be the voltage at Paschen's minimum. In case of a fault or failure in the system, for example a failure in the controller 307 or a sensor (e.g. a pressure sensor) of the sensor arrangement 308, the system may default to (Vmax)min to ensure that the power distribution system does not operate at a voltage at which electrical breakdown could occur.

Figure 6B illustrates a second embodiment according to which a maximum allowed operating voltage of the electrical power distribution system is varied in a step-wise manner according to the altitude of the aircraft. Once again, the maximum system operating voltage (Vₘₐₓ) is plotted on the y-axis and aircraft altitude is plotted on the x-axis, though ambient pressure could equally be plotted on the x-axis.

A number (in this example three) of nominal altitude (or pressure) levels/thresholds are defined, illustrated in Figure 4B by solid vertical lines labelled "Low", "Mid" and "High". A corresponding maximum voltage level is defined for each of these altitude thresholds, illustrated by the horizontal lines. If the altitude of the aircraft increases and crosses an altitude threshold then the maximum operating voltage is decreased to the corresponding voltage level. Likewise, if the altitude decreases and crosses an altitude threshold then the maximum operating voltage is increases to the corresponding voltage level. The zero-altitude maximum voltage level, (Vmax)o, is labelled in Figure 6B. No minimum voltage level, (Vmax)min, is labelled but it will be understood that (Vmax)min could be implemented in this embodiment in the manner described above.

Hysteresis bands may be utilized to prevent oscillation of the maximum operating voltage in case of fluctuation of the altitude of the aircraft about one of the altitude thresholds. Specifically, upper and lower hysteresis thresholds, illustrated by the dashed vertical lines, are defined either side of the main threshold. The altitude must increase beyond the upper hysteresis threshold for the maximum voltage to decrease. Conversely, the altitude must decrease beyond the lower hysteresis threshold for the operating voltage to increase. No voltage change occurs for power demand variation within the hysteresis band.

Thus, it will be understood that a measure of aircraft altitude or ambient pressure may be used (by e.g. the controller 307) to determine a maximum voltage for an aircraft electrical power distribution system. The actual operating voltage is selected to be the lower voltage out of the determined maximum voltage and the preferred voltage as determined using a measure of the system electrical power demand (e.g. based on the speed of the airflow through a gas turbine engine of the aircraft).

### Figure 7

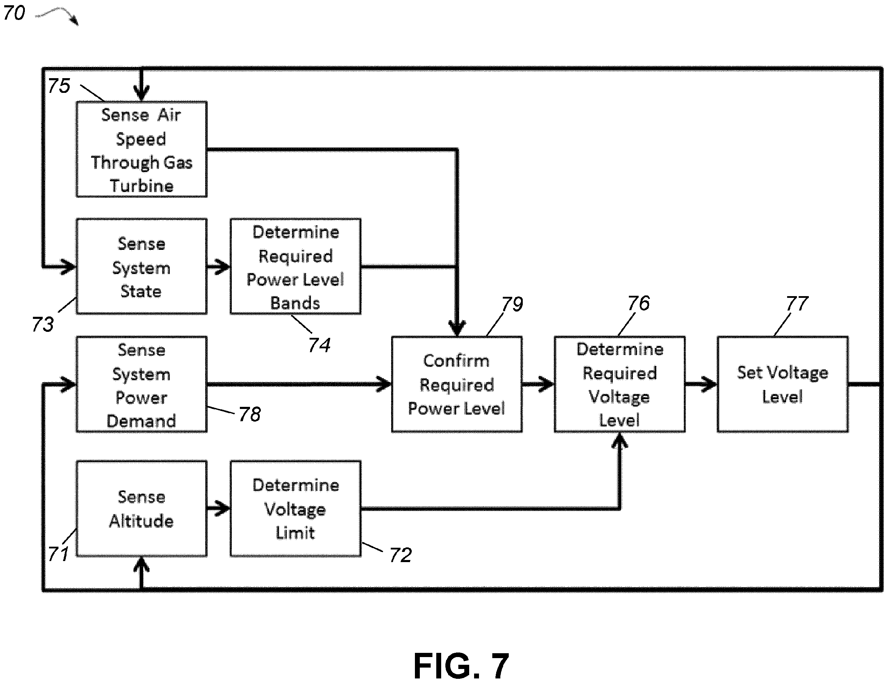

Figure 7 illustrates a control loop 70 for controlling an operating voltage of an aircraft electrical power distribution system. The control loop 70 may be implemented by the controller 307 and the voltage regulator 304 of the electrical power distribution system, using data provided by the sensor arrangement 308.

At 71, the sensor arrangement 308 senses the altitude of the aircraft. For example, pressure data or satellite position system data may be used to determine the altitude of the aircraft. Raw sensor data may be provided to and processed by the controller 307. Alternatively, the sensor arrangement 308 may itself have processing capability, with the determined altitude subsequently provided to the controller.

At 72, the controller 307 determines the maximum permitted operating voltage of the system 300 based on the altitude. This may be performed as described above with reference to Figures 5, 6A and 6B.

At 73, the sensor arrangement 308 and/or the controller determines a system state of the aircraft. The term "system state" will be understood to refer an operating system state of the aircraft, a number of which can be pre-defined. For example, the system state may be determined to be any one of the following non-exhaustive list:
i. A ground idle system state. For example, the aircraft may be on the ground and stationary or taxiing, with its gas turbine engine(s) running at ground idle.
ii. A low-altitude take-off system state. For example, the aircraft may be in the early stages of take-off, either on the ground and about to take-off or gaining altitude shortly after leaving the ground. Low altitude take-off may be a sub-state of a take-off state in which the aircraft is below a pre-defined altitude (e.g. below 10,000 feet).
iii. A high-altitude take-off system state. For example, the aircraft may have taken off and already reached a significant altitude, but is continuing to climb towards a cruising altitude. High altitude take-off may be a sub-state of a take-off state in which the aircraft is above a pre-defined altitude (e.g. above 10,000 feet).
iv. A cruise system state. For example, the aircraft may be maintaining a steady speed and altitude (e.g. Mach 0.85 at 35,000 feet).
v. A reheat system state. In other words, the afterburners of an engine have been engaged.
vi. A supersonic cruise system state. In other words, the aircraft is maintaining a steady speed that is above Mach 1.
vii. A descent system state. In other words, the aircraft is steadily losing altitude.
viii. A landing system state. For instance, a gas turbine engine of the aircraft may be in an approach idle condition.
ix. In an aircraft with vertical take-off and landing (VTOL) capabilities, for example an eVTOL aircraft, the state of the propulsion/control system. For example, the propulsion system may be reconfigurable between a horizontal flight configuration/state and a VTOL configuration/state.

The controller 307 may determine the system state in any suitable way, and a variety of ways will occur to those skilled in the art. For example, the controller 307 may receive the system state via a Flight Management System (FMS) or Flight Control System (FCS) of the aircraft, or may determine it based on characteristic combinations of sensed parameters (e.g. speed and altitude, and possibly the rates of changes of the quantities).

At 74, the controller 307 determines appropriate power level bands based on the system state determined at 73. For example, for each one of the possible system states, the controller 307 may store a different relationship between the operating voltage level of the electrical power system 300 and the electrical power demand of the system. Each of these relationships may define a different range of allowable operating voltages and/or a different relationship (e.g. linear or non-linear, different gradient values). For example, there may be a plurality of different relationships of the type shown in Figure 4A or Figure 4B, each one corresponding to a different system state.

At 75, the sensor arrangement 308 senses the speed of the airflow through one or more gas turbine engines (or propulsors) of the aircraft. In other embodiments, a different measure of the electrical power demand (e.g. aircraft airspeed, engine or propulsor pressure, spool rotational speed, a temperature in the engine or propulsor, or a parameter of a thermal management system) is determined at step 75. In some embodiments, for example if the relationship of step 74 relates power demand and operating voltage level, the controller 307 may convert the sensed parameter (e.g. airflow speed) into an approximate power level using a predetermined relationship.

At 76, based on the relationship identified in step 74 and the airflow speed determined at step 75, the controller 307 determines a preferred operating voltage for the electrical power distribution system 300 for meeting the electrical power demand. The higher the power demand (as indicated by the airflow speed or other correlated parameter), the higher the preferred operating voltage so that I²R losses are kept low, as illustrated in Figures 4A and 4B.

The preferred operating voltage is checked against the maximum allowable operating voltage determined at step 72. In particular, the controller 307 selects the lower of the two voltages so that electrical power distribution system 300 does not operate at a voltage at which there is a significant risk of electrical breakdown.

At 77, the voltage regulator 304 sets the target operating voltage of the system 300 equal to the voltage determined at step 76. For example, the voltage regulator may control one or more of the power generation source 302, power electronics and a transformer so that voltage on the distribution bus 310 is approximately equal to the target voltage.

The control loop 70 then repeats to set a new target operating voltage, optionally with the addition of the two remaining boxes 78, 79.

At 78, the sensor arrangement 308 senses an actual power demand of the electrical loads served by the electrical power system 300. For example, current sensors located on the distribution bus 310 and/or controllers or sensors associated with the loads 309, 313, 315 may feedback data to the controller 307, which in turns estimates the total electrical power demand.

At 79, the controller 307 compares the sensed power demand from step 78 with the approximate power level as indicated by the system state determined at step 73 and/or the airflow speed (or other parameter) determined at step 75. If there is sufficient agreement (e.g. if the difference is smaller than a threshold amount), the control loop 70 may proceed to step 76 as before.

However, if there is a significant difference between the sensed power demand and the power demand(s) associated with steps 73-75, the controller 307 may determine there is a fault or another anomaly. Such an anomaly may occur because, for example, a combination of non-continuous loads not anticipated by the system state (step 73) is being used. In this case, the controller 307 may increase or decrease the operating voltage to account for difference, for example to account for the non-continuous loads. Alternatively, the controller 307 may disengage the control loop 70 and instead revert to another means of control. For instance, the controller 307 may revert to the use of a fixed operating voltage, or control the voltage only as a function of altitude. The control of the voltage as a function of altitude is described above with reference to Figures 5, 6A and 6B and is described in more detail in UK Patent Application 2008070.1, filed on 29 May 2020, the entire contents of which are incorporated herein by reference.

### Figure 8

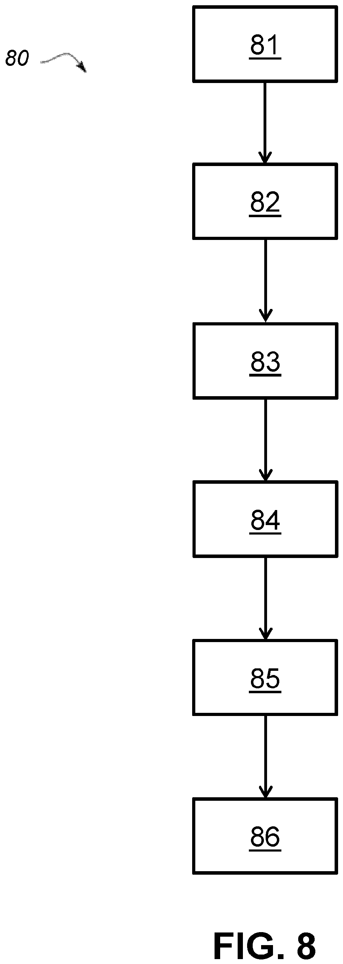

Figure 8 illustrates a method 80 of controlling the operation of an aircraft electrical power distribution system. The method begins at 81.

At 81, a controller 307 determines a measure of an electrical power demand of the electrical power and propulsion system 300 of the aircraft. The measure of the electrical power demand may be a measure of a gas turbine engine or propulsor operating parameter, a measure of an operating parameter of a thermal management system, or another aircraft operating parameter.

In one embodiment, the measure of the electrical power demand is a speed of the airflow through a gas turbine engine (or propulsor) of the aircraft. The speed may be measured at any suitable location within the engine, for example at the inlet or outlet of a high pressure compressor of the engine.

In other embodiments, the measure of the electrical power demand additionally or alternatively includes one or more other operating parameters of the gas turbine engine or propulsor, for example a pressure within the gas turbine engine or propulsor; a speed or rotation of one or more of the spools or shafts; a temperature within the engine, propulsor or thermal management system thereof; or a rate of fuel flow into a combustor of the engine. These parameters may be determined at any suitable location within the engine or propulsor.

The controller 307 may receive the measure of the electrical power demand (e.g. the speed of the airflow through the engine) from a sensor arrangement 308, which can include any suitable combination of sensors. The controller 307 may also receive data from the sensor arrangement and determine the measure of the electrical power demand (e.g. the speed of the airflow through the engine) using the received data.

Optionally, at 82, the controller 307 determines an operating state of the aircraft. The operating state is one of a plurality of pre-defined operating states of the aircraft. The plurality of operating states may include, for example, any combination of the system states described above with reference to box 73 of the control loop 70.

Optionally, at 83, the controller 307 determines a measure of ambient pressure or a measure of an altitude of the aircraft. The controller 307 may receive the measure from the sensor arrangement 308 or may receive data from the sensor arrangement 307 and determine the measure of ambient pressure or altitude of the aircraft itself.

Optionally, at 84, the controller 307 determines a measure of an electrical power demand associated with one or more non-continuous electrical loads of the aircraft power and propulsion system. The non-continuous loads are loads which are, in the context of the overall flight, rarely used. They may, for example, be electrical actuators for an application-specific aircraft system. The power demand may be measured or approximated from suitable voltage and/or current measurements.

At 85, the controller 307 sets a target operating voltage of the aircraft electrical power distribution system based at least in part on the measure of the system electrical power demand (e.g. speed of the airflow through the gas turbine engine). For example, the controller 307 may select a voltage level for the system (e.g. for the distribution bus 310) as a continuous function of the measure of the power level, as in Figure 4A. In other examples, the controller 307 may select a voltage level for the system 300 (e.g. for the distribution bus 310) using a stepped function as in Figure 4B.

Where a measure of the ambient pressure or altitude of the aircraft has been determined, the controller 307 may set the target operating voltage of the system based on both the measure of the system electrical power demand (e.g. speed of the airflow through the gas turbine engine) and the measure of the ambient pressure or altitude of the aircraft. For example, the controller 307 may make use of a function which outputs an operating voltage level based on inputs including both the measure of the system electrical power demand (e.g. speed of the airflow through the gas turbine engine) and the measure of the ambient pressure or altitude of the aircraft.

In some embodiments, the controller 307 sets the target operating voltage of the system so that it is less than or equal to a maximum permissible operating voltage. Where a measure of the ambient pressure or altitude of the aircraft has been determined, the maximum permissible voltage may be determined based on the measure of the ambient pressure or altitude. In some embodiments, the controller 307 may select the maximum permissible voltage level as a continuous function of the measure of the ambient pressure of altitude, as in Figure 6A. In other embodiments, the controller 307 may select the maximum permissible voltage level using a stepped function as in Figure 6B.

Where an operating state of the aircraft has been determined, the controller 307 may set the target operating voltage of the system 300 based on the measure of the system electrical power demand (e.g. speed of the airflow through the gas turbine engine), the operating state of the aircraft and, optionally, the measure of the ambient pressure or altitude of the aircraft. In some embodiments, each of the plurality of the possible operating states corresponds to a different range of permissible operating voltages. Additionally or alternatively, each different operating state may correspond to a different relationship between voltage and power demand, e.g. a different version of a relationship shown in Figure 4A or 4B, the different versions of the relationships having different gradients and/or different zero-load voltages.

Where a measure of an electrical power demand associated with one or more non-continuous loads has been determined, the controller 307 may set the target operating voltage of the system based on the measure of the system electrical power demand (e.g. speed of the airflow through the gas turbine engine) and the measure of the electrical power demand associated with the one or more non-continuous loads. For example, a voltage may be determined based on the e.g. speed of airflow, and that voltage modified (e.g. increased) based on the status of the non-continuous electrical loads. The target operating voltage of system 300 may be further based on the operating state of the aircraft and/or the measure of the ambient pressure or altitude of the aircraft.

At 85, a voltage regulator 304 controls the operating voltage in accordance with the target operating voltage set by the controller 307. For example, as described above with reference to Figure 3, the voltage regulator 304 may control the operation of a power source 302 and/or power electronics to modify the operating voltage of the distribution system. It may, for example, control the voltage output to a distribution bus 310, which may be a dc or ac bus comprising one or multiple power channels.

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

It should also be noted that whilst the embodiments have been described with reference to an aircraft, and to turbofan engines, it will be understood that the principles of the described electrical systems may be applied to other installations, for example to aircraft with turboprop engines, aircraft with purely electric power and propulsion systems, and to marine environments such as on a naval vessel powered by gas turbines, a hybrid system or purely electric system.

## Claims

1. A method (80) of operating an aircraft electrical power distribution system, the method comprising:
determining (81) a measure of an electrical power demand of a power and propulsion system (300) of the aircraft;
**characterized in that** the method further comprises:
setting (85) a target operating voltage of the aircraft electrical power distribution system based at least in part on the measure of the electrical power demand; and
controlling (86) the operating voltage in accordance with the set target operating voltage.

2. The method (81) of claim 1, in which the measure of the electrical power demand is a measure of an operating parameter of a gas turbine engine (101, 201) of the aircraft, or a measure of an operating parameter of a propulsor (204) of the aircraft.

3. The method (80) of claim 2, in which the operating parameter of the gas turbine engine (101, 201) or propulsor (204) is a speed of an airflow through the gas turbine engine or propulsor.

4. The method (80) of claim 2 or claim 3, in which the operating parameter of the gas turbine engine (101, 201) or propulsor (204) is one or more of:
a rotational speed of a spool or shaft of the gas turbine engine or propulsor;
a rate of fuel flow into a combustor of the gas turbine engine;
a pressure in the gas turbine engine or propulsor; and
a temperature in the gas turbine engine or propulsor.

5. The method (80) of claim 1, in which the measure of the electrical power demand is a measure of an operating parameter of a thermal management system.

6. The method (80) of any one of the preceding claims, further comprising:
determining (82) an operating state of the aircraft, the operating state being one of a plurality of pre-defined operating states of the aircraft,
and wherein setting (85) the target operating voltage of the aircraft electrical power distribution system is further based on the determined operating state of the aircraft.

7. The method (80) of claim 6, wherein the plurality of pre-defined operating states include one or more of:
a propulsion system configuration of a VTOL aircraft having multiple propulsion system configurations;
a ground idle condition of a gas turbine engine;
a take-off condition of a gas turbine engine;
a cruise condition of a gas turbine engine; and
a reheat condition of a gas turbine engine.

8. The method (80) of claim 6 or claim 7, in which each one of the plurality of pre-defined operating states corresponds to a range of operating voltages, and wherein setting (85) the target operating voltage of the aircraft electrical power distribution system comprises setting a target operating voltage that is within the range of operating voltages corresponding to the determined operating state.

9. The method (80) of any one of the preceding claims, further comprising:
determining (84) a measure of an electrical power demand associated with one or more non-continuous electrical loads of the aircraft power and propulsion system (300),
and wherein setting (85) the target operating voltage of the aircraft electrical power distribution system is further based on the measure of the electrical power demand associated with the one or more non-continuous electrical loads.

10. The method (80) of any one of preceding claims, in which setting (85) the target operating voltage comprises:
(i) continuously increasing the target operating voltage when the electrical power demand is increasing;
(ii) continuously decreasing the target operating voltage when the electrical power demand is decreasing; and
(iii) maintaining the target operating voltage at a constant level when the electrical power demand is constant.

11. The method (80) of any of claims 1 to 9, in which setting (85) the target operating voltage comprises:
(i) pre-defining a plurality of set power demand levels;
(ii) stepping up the voltage to a pre-set level of a plurality of pre-set voltage levels if the electrical power demand of the power and propulsion system increases towards or past a value corresponding to one of the set levels; and
(iii) stepping down the voltage to a pre-set level of a plurality of pre-set voltage levels if the electrical power demand of the power and propulsion system decreases towards or past a value corresponding to one of the set levels.

12. The method (80) of any one of the preceding claims, further comprising:
determining (83) a measure of ambient pressure or a measure of an altitude of the aircraft,
and wherein setting (85) the target operating voltage of the aircraft electrical power distribution system is further based on the measure of ambient pressure or a measure of an altitude of the aircraft.

13. The method (80) of claim 12, in which setting (85) the target operating voltage of the aircraft electrical power distribution system (300) comprises:
determining, based at least in part on the measure of the electrical power demand of the power and propulsion system (300), a first operating voltage for the aircraft electrical power distribution system;
determining, based at least in part on the measure of ambient pressure or a measure of an altitude of the aircraft, a second operating voltage for the aircraft electrical power distribution system; and
setting the target operating voltage equal to the lower of the first and second operating voltages.

14. An aircraft electrical power distribution system comprising:
one or more sensors (308) arranged to determine a measure of an electrical power demand of a power and propulsion system (300) of the aircraft; and
a controller (307), **characterized in that:**
the controller is arranged to set a target operating voltage of the aircraft electrical power distribution system based at least in part on the measure of the electrical power demand; and
the electrical power distribution system further comprises a voltage regulator (304) arranged to regulate the operating voltage of the electrical power distribution system in accordance with the set target operating voltage.

15. An aircraft comprising the aircraft electrical power distribution system of claim 14.
